# EUROPÄISCHE PATENTANMELDUNG

(11) **EP 0 858 756 A1**
(43) Veröffentlichungstag der Anmeldung: **19.08.1998**
(21) Anmeldenummer: 97121818.5
(22) Anmeldetag: 11.12.1997
(51) Int. Cl.: A47J 31/08

(54) **Filterpapiereinsatz**

(30) Priorität: 14.02.1997 DE 29702546 U
(71) Anmelder: MELITTA HAUSHALTSPRODUKTE GmbH & Co. Kommanditgesellschaft, D-32427 Minden (DE)
(72) Erfinder: Sachtleben, Andreas, 32427 Minden (DE)
(74) Vertreter: Stracke, Alexander, Dipl.-Ing.

(57) **Zusammenfassung**

Gegenstand der Erfindung ist ein Filterpapiereinsatz (10) für ein im wesentlichen zylindrisches Filtergefäß.

Der Filterpapiereinsatz (10) ist aus einem an einem stirnseitigen Ende durch eine Bodennaht (12) verschlossenen Schlauchabschnitt (11) gefertigt, wobei der Schlauchabschnitt (11) aus einem spiralförmig und überlappend aufgewickelten sowie im Überlappungsbereich mit einer umlaufenden Seitennaht (13) versehenen Filterpapierstreifen (14) hergestellt.

Dieser Aufbau sichert eine preiswerte wie auch praktisch abfallfreie Herstellung von Filterpapiereinsätzen.

## Beschreibung

Die vorliegende Erfindung betrifft einen Filterpapiereinsatz für ein im wesentlichen zylindrisches Filtergefäß, insbesondere zur Herstellung von Aromaauszügen aus Kaffee oder Tee.

Filterpapiereinsätze für im wesentlichen zylindrische Filtergefäße sind an sich bekannt.

Der vorliegenden Erfindung liegt die Aufgabe zugrunde, einen Filterpapiereinsatz der gattungsgemäßen Art zu schaffen, der sowohl preiswert wie auch praktisch abfallfrei herstellbar ist.

Diese Aufgabe wird erfindungsgemäß dadurch gelöst, daß der Filterpapiereinsatz aus einem an einem stirnseitigen Ende durch eine Bodennaht verschlossenen Schlauchabschnitt besteht, wobei der Schlauchabschnitt aus einem spiralförmig und überlappend aufgewickelten sowie im Überlappungsbereich mit einer umlaufenden Seitennaht versehenen Filterpapierstreifen hergestellt ist.

Ein derartiger Filterpapiereinsatz kann auf einfache Art und Weise äußerst preiswert hergestellt werden. Ein Filterpapierstreifen wird auf einem Wickeldorn spiralförmig und überlappend aufgewickelt und gleichzeitig im Überlappungsbereich mit einer umlaufenden Seitennaht versehen. Der auf diese Art hergestellte Schlauch kann dann in entsprechend gewünschten Längen mit einer Bodennaht versehen und vom übrigen Schlauch abgetrennt werden. Diese Herstellmethode ist äußerst unkompliziert, einfach und preiswert durchführbar und beinhaltet praktisch keinerlei Fehlerquellen.

Ein weiterer Vorteil liegt darin, daß die Herstellung praktisch abfallfrei erfolgt, da der für die Herstellung von entsprechenden Filterpapiereinsätzen benötigte Filterpapierstreifen praktisch zu 100 % genutzt wird.

Weitere Merkmale der Erfindung sind Gegenstand von Unteransprüchen.

Ausführungsbeispiele der Erfindung sind in den beigefügten Zeichnungen dargestellt und werden im folgenden näher beschrieben.

Es zeigen:
- Figur 1: eine schematisch dargestellte Ansicht eines erfindungsgemäßen Filterpapiereinsatzes,
- Figur 2: eine schematische Darstellung einer Vorrichtung zur Herstellung von Filterpapiereinsätzen gemäß Figur 1,
- Figur 3: eine Ansicht in Richtung des Pfeiles III in Figur 2,
- Figur 4: eine schematische Darstellung einer Vielzahl von noch zusammenhängenden und zu einer Rolle aufgewickelten Filterpapiereinsätzen,
- Figur 5: eine schematische Darstellung einer Vielzahl von noch zusammenhängenden, leporelloartig zusammengefalteten Filterpapiereinsätzen.

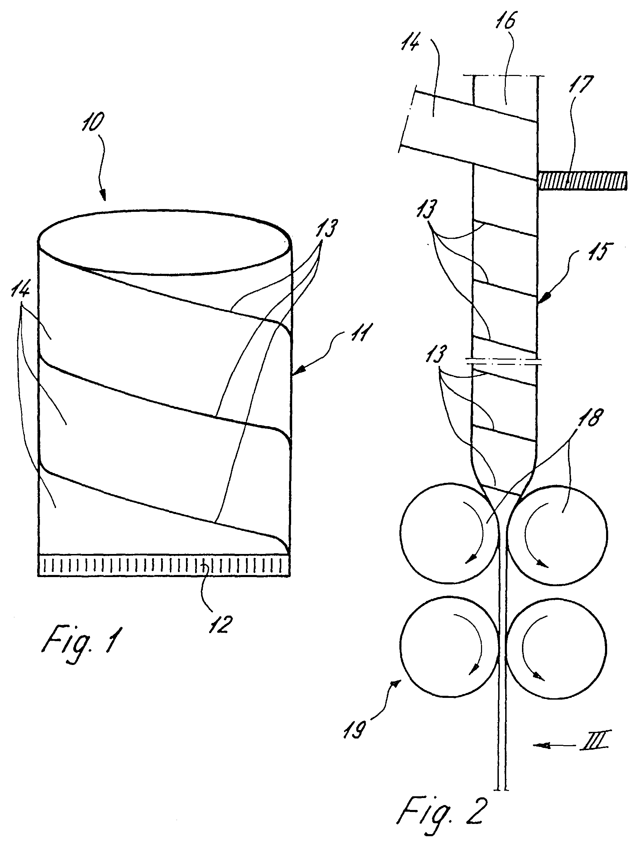

In Figur 1 ist mit dem Bezugszeichen 10 insgesamt ein Filterpapiereinsatz bezeichnet, der für ein im wesentlichen zylindrisches - in den Zeichnungen nicht dargestelltes - Filtergefäß vorgesehen ist. Dieser Filterpapiereinsatz 10 besteht aus einem Schlauchabschnitt 11, der an einem seiner stirnseitigen Enden durch eine Bodennaht 12 verschlossen ist. Der Schlauchabschnitt 11 ist aus einem spiralförmig und überlappend aufgewickelten sowie im Überlappungsbereich mit einer umlaufenden Seitennaht 13 versehenen Filterpapierstreifen 14 hergestellt.

Wie Figur 2 zeigt, gestaltet sich die Herstellung eines entsprechenden Schlauches 15, aus dem dann einzelne Filterpapiereinsätze 10 gefertigt werden können, recht einfach.

Auf einem Wickeldorn 16 wird ein Filterpapierstreifen 14 spiralförmig und überlappend aufgewickelt. Über ein entsprechendes Prägewerkzeug 17 wird im Überlappungsbereich eine umlaufende Seitennaht 13 erzeugt. Der in dieser Art hergestellte Schlauch 15 wird durch Abzugswalzen 18 vom Wickeldorn 16 abgezogen und flach zusammengelegt. In einer weiteren, nachfolgenden Bearbeitungstation 19 wird die schon erwähnte Bodennaht 12 erzeugt. Gleichzeitig kann hier ein Abtrennen einzelner Filterpapiereinsätze 10 erfolgen, ebenso ist es denkbar, in der Bearbeitungsstation 19 außerhalb der jeweiligen Prägenaht 12 eine Perforationslinie 20 oder eine andere Materialschwächung anzubringen die es gestattet, jeweils einzelne Filterpapiereinsätze 10 vom vorgefertigten Schlauch 15 abzutrennen.

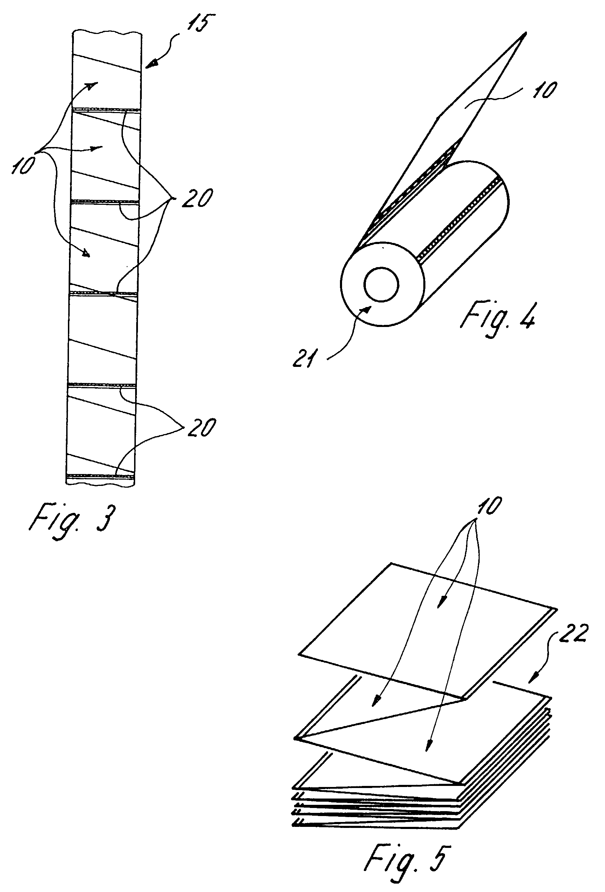

Der eine Vielzahl von Filterpapiereinsätzen 10 aufweisende Schlauch 15 kann selbstverständlich auch zu einer Rolle 21 aufgewickelt werden, so wie dies Figur 4 zeigt, so daß ein Verbraucher je nach Bedarf jeweils einen Filterpapiereinsatz 10 von dieser Rolle 21 abtrennen kann.

Wie Figur 5 zeigt, kann eine Vielzahl von noch zusammenhängenden Filterpapiereinsätzen 10 auch leporelloartig zusammengefaltet werden, auch hier hat der Endverbraucher die Möglichkeit, jeweils einen benötigten Filterpapiereinsatz 10 vom leporelloartig zusammengefalteten Stapel 22 zu trennen.

Die Bodennaht 12 ist ebenso wie die spiralförmig umlaufende Seitennaht 13 vorteilhafterweise als Prägenaht ausgebildet.

Es ist aber ebenso denkbar, die Bodennaht 12 und/oder die Seitennaht 13 als Klebenaht auszubilden, wobei dann vorteilhafterweise dann ein lebensmittelunbedenklicher Kleber verwendet wird.

Wird ein erfindungsgemäßer Filterpapiereinsatz 10 in einem im wesentlichen zylindrischen Filtergefäß eingesetzt, so legt sich der Filterpapiereinsatz 10 und somit auch die im Mantelbereich umlaufende Seitennaht 13 an die Innenwandung des Filtergefäßes an. Die während eines Filtervorganges auf die Seitennaht 13 einwirkenden Kräfte wirken nahezu ausschließlich lotrecht zur Seitennaht 13, so daß diese nicht oder nur unwesentlich belastet wird. Die Gefahr einer Beschädigung oder des Aufreißens im Nahtbereich ist somit nicht gegeben.

Abschließend sei noch darauf hingewiesen, daß die einzelnen Filterpapiereinsätze 10 natürlich in der Bearbeitungsstation 19 auch vollständig voneinander getrennt und bei Bedarf dann einzeln übereinandergestapelt werden können.

## Patentansprüche

1. Filterpapiereinsatz für ein im wesentlichen zylindrisches Filtergefäß, insbesondere zur Herstellung von Aromaauszügen aus Kaffee oder Tee, **dadurch gekennzeichnet, daß** der Filterpapiereinsatz (10) aus einem an einem stirnseitigen Ende durch eine Bodennaht (12) verschlossenen Schlauchabschnitt (11) besteht, wobei der Schlauchabschnitt (11) aus einem spiralförmnig und überlappend aufgewickelten sowie im Überlappungsbereich mit einer umlaufenden Seitennaht (13) versehenen Filterpapierstreifen (14) hergestellt ist.

2. Filterpapiereinsatz nach Anspruch 1, **dadurch gekennzeichnet, daß** die Bodennaht (12) eine Prägenaht ist.

3. Filterpapiereinsatz nach Anspruch 1 oder 2, **dadurch gekennzeichnet, daß** die spiralförmig umlaufende Seitennaht (13) eine Prägenaht ist.

4. Filterpapiereinsatz nach Anspruch 1, **dadurch gekennzeichnet, daß** die Bodennaht (12) eine unter Verwendung eines lebensmittelunbedenklichen Klebers hergestellte Klebenaht ist.

5. Filterpapiereinsatz nach Anspruch 1 oder 4, **dadurch gekennzeichnet, daß** die spiralförmig umlaufende Seitennaht (13) eine unter Verwendung eines lebensmittelunbedenklichen Klebers hergestellte Klebenaht ist.
